# EUROPÄISCHE PATENTSCHRIFT

(11) **EP 2 644 447 B1**
(45) Veröffentlichungstag und Bekanntmachung des Hinweises auf die Patenterteilung: **17.06.2015**
(21) Anmeldenummer: 13001327.9
(22) Anmeldetag: 15.03.2013
(51) Int. Cl.: B60N 2/56

(54) **Lüfteranordnung für einen Fahrzeugsitz**
Ventilator assembly for a vehicle seat
Installation de ventilateur pour un siège de véhicule

(30) Priorität: 27.03.2012 DE 202012003074 U
(43) Veröffentlichungstag der Anmeldung: 02.10.2013
(73) Patentinhaber: I.G. Bauerhin GmbH, 63584 Gründau (DE)
(72) Erfinder: Axakov, Dmitri, Windsor, N9E 4B2 (CA); Michelmann, Jochen, D-63571 Gelnhausen (DE)
(74) Vertreter: Grimm, Ekkehard

(56) Entgegenhaltungen:
- DE-A1- 10 010 986
- JP-A- 2011 104 246

## Beschreibung

Die Erfindung betrifft eine Lüfteranordnung für einen Fahrzeugsitz mit einem ein Lüftergehäuse aufweisenden Radiallüfter, wobei das Lüftergehäuse eine axiale und eine radiale Gehäuseöffnung aufweist und wobei das Lüftergehäuse mit dessen axialer Gehäuseöffnung auf einer Trägerplatte, die Teil eines Sitzgestells ist, positioniert ist und durch mindestens ein Halteelement daran gehalten ist, wobei im Auflagebereich zwischen dem Lüftergehäuse und der Trägerplatte eine Zwischenschicht positioniert ist.

In Fahrzeugsitzen werden neben Heizeinrichtungen zunehmend auch Belüftungseinrichtungen eingebaut. Solche Belüftungseinrichtungen, die der Klimatisierung eines Sitzes dienen, waren in der Vergangenheit aus Kostengründen Fahrzeugen der 0-berklasse vorbehalten. Da der Anspruch an den Komfort eines Fahrzeuges auch im Bereich der Mitteklassefahrzeuge und Kleinwagen steigt, werden auch in diesen Fahrzeugklassen klimatisierte Fahrzeugsitze als optionale Ausstattungsmerkmale angeboten.

Solche Belüftungseinrichtungen umfassen einen oder mehrere Lüfter, die mit Lüftungskanälen in dem Polsterkern des Sitzes und/oder mit einer sich unterhalb des Bezugsstoffs befindenden Luftverteilungsschicht in Strömungsverbindung stehen. Mit diesen Einrichtungen können sowohl die Sitzflächen als auch die Rückenlehnen und selbst die Kopfstützen klimatisiert werden.

Eine gattungsgemässe Lüfteranordnung an einem Sitz ist aus dem Dokument JP-2011104246 bekannt.

Ein Hauptbestandteil der Klimatisierungseinrichtung ist ein Lüfter. Bei dem Einsatz solcher Lüfter ist unter anderem zu beachten, dass sie den Anforderungen entsprechend die Luft zu bestimmten Bereichen der Sitz- und Lehnenflächen zu- und/oder abführen, dass sie in Bereichen des Sitzes angeordnet werden können, wo entsprechender Raum zur Verfügung steht, und dass sie eine einfache und schnelle Montage ermöglichen. Dadurch, dass in belüfteten Fahrzeugsitzen Lüfter zum Einsatz kommen, haben diese Fahrzeugsitze Probleme mit störenden Schwingungen bzw. Vibrationen, die durch die eingesetzten Lüfter selbst erzeugt werden können. Die Vibrationen sind ein unerwünschter Effekt, den es gilt während des Betriebs des Lüfters zu reduzieren, so dass ein Insasse, der auf dem Fahrzeugsitz sitzt, diese nicht mehr wahrnimmt oder spürt. Somit müssen die Vibrationen, die durch die Unwucht des Lüfters verursacht wird, von der Oberfläche des Fahrzeugsitzes ferngehalten werden. Der vorliegenden Erfindung liegt nun die Aufgabe zugrunde, eine Lüfteranordnung für einen Fahrzeugsitz mit einem Radiallüfter zur Ventilation eines Sitzes zu schaffen, die eine einfache und schnelle Anbringung eines Radiallüfters ermöglicht und somit eine Reduzierung der Herstellungskosten mit sich führt. Weiterhin sollen auf einfache Weise die vom Radiallüfter erzeugten Schwingungen so reduziert werden, dass auf der Oberfläche des Sitzes nichts mehr davon spürbar ist.

Gelöst wird diese Aufgabe durch eine Lüfteranordnung für einen Fahrzeugsitz mit den Merkmalen des Anspruchs 1. Die Lüfteranordnung zeichnet sich dadurch aus, dass das Halteelement mindestens einen oberen, zwei mittlere und zwei untere Abschnitte umfasst, wobei die mittleren Abschnitte jeweils an die Enden des oberen Abschnitts, dazu abgewinkelt, anschließen und die unteren Abschnitte jeweils einen der Trägerplatte zugeordneten Fuß an dem anderen Ende des jeweiligen mittleren Abschnitts bilden, wobei der obere Abschnitt und die mittleren Abschnitte so dimensioniert sind, dass sich der obere Abschnitt auf der der Trägerplatte abgewandten Seite an das Lüftergehäuse anlegt, und wobei zumindest die mittleren Abschnitte reversibel verformbar sind. Weiterhin besteht die Zwischenschicht aus einem reversibel verformbaren Material.

Ein Vorteil dieser Lüfteranordnung ist darin zu sehen, dass der Radiallüfter mit Lüftergehäuse, bei dem es sich um eine handelsübliche Einheit aus einer Großserienfertigung handeln kann, ohne bauliche Veränderung mittels dem Halteelement auf der Trägerplatte, die Teil eines Sitzgestells ist, gehalten wird. Dabei weist die Trägerplatte eine gitter- oder strebenähnliche Struktur in dem Bereich, in dem die axiale Gehäuseöffnung des Radiallüfters und die Trägerplatte in Strömungsverbindung stehen, auf. Das Halteelement überspannt auf der dem Insassen abgewandten Seite zumindest bereichsweise das Lüftergehäuse, so dass es mittels mindestens einem Positionierungselement den Fuß des Halteelements mit der Trägerplatte verbindet. Das Lüftergehäuse wird mit der axialen Gehäuseöffnung auf der Trägerplatte positioniert, wobei dazwischen eine vibrationsdämpfende Zwischenschicht positioniert ist, die die in axialer Richtung auftretenden Vibrationen aufnimmt und somit von der Sitzoberfläche fernhält. Weiterhin dient die Zwischenschicht dazu, von einem Insassen ausgehende Kräfte, die auf die Sitz- oder Lehnenfläche wirken und die Funktion des Radiallüfters beeinträchtigen könnten, aufzunehmen. Auch könnte zwischen der dem Insassen abgewandten Seite des Schaumkörpers und der Trägerplatte eine weitere Zwischenlage angeordnet werden, so dass mögliche Stöße noch besser von der Lüfteranordnung ferngehalten werden können.

Lufteinlässe bzw. -kanäle, die in einem Schaumkörper der Sitzpolsterung eingelassen sind, stehen in Strömungsverbindung mit der Trägerplatte, mit der Zwischenschicht und mit der axialen Gehäuseöffnung des Radiallüfters, so dass die von dem Radiallüfter abgegebene oder angesaugte Luft zu der Sitz- oder Lehnenfläche des Sitzes zugeführt oder davon abgesaugt wird.

Die erfindungsgemäße Lüfteranordnung, die den Radiallüfter mit Lüftergehäuse umfasst, kann in einfacher Weise für den Einbau an einer Sitzwanne oder Trägerplatte, die Teile eines Sitzgestells sind, an unterschiedlichen Stellen eingesetzt werden.

Das Lüftergehäuse und das Zwischenmaterial werden durch das Halteelement gehalten. Die Länge des mittleren Abschnitts ist, bei Einsatz eines handelsüblichen Radiallüfters, kürzer als die Summe der Höhe des Lüftergehäuses und der Zwischenschicht, so dass die Zwischenschicht etwas gestaucht werden muss. Die Zwischenschicht ist jedoch nur so viel gestaucht, dass ein weiteres Stauchen in axialer Richtung noch möglich ist.

Bevorzugt ist an dem Halteelement mindestens ein Positionierungselement angeordnet, das das Gehäuse des Radiallüfters fixiert.

In einer vorteilhaften Ausführungsform ist das mindestens eine Positionierungselement, das sich an dem Halteelement befindet, als Zapfen ausgebildet, der in eine Öffnung in dem Gehäuse des Radiallüfters eingreift. Der Zapfen ist in einer vorteilhaften Ausführungsform von einer zylindrischen Form. Bevorzugt hat der Zapfen eine zum freien Ende hin konisch zulaufende Form. Durch ein Positionierungselement in Form eines Zapfens ist der Radiallüfter nicht starr und fest mit dem Halteelement und der Trägerplatte verbunden, sondern im gewissen Sinne beweglich gehalten, so dass der Radiallüfter in gewissen Grenzen beweglich ist, aber diese Bewegungen nicht auf einen auf dem Sitz sitzenden Insassen übertragen werden. Auch die zwischen dem Radiallüfter und der Trägerplatte befindliche Zwischenschicht absorbiert die Vibrationen, die sich ansonsten auf die Sitzoberfläche durchschlagen würden.

Im Falle einer ungewöhnlichen, auf den Radiallüfter über die Sitzpolsterung einwirkenden Belastung, wie beispielsweise durch Stöße, ist das Halteelement in der Lage, Zug- oder Stauchkräften zu widerstehen. Dies wird durch mindestens einen gebogenen mittleren Abschnitt des Halteelements erreicht, durch den der obere Abschnitt unter leichter Spannung gegen die obere Gehäuseseite anliegt und dadurch das Lüftergehäuse in Richtung der Zwischenschicht und der Trägerplatte gedrückt wird. Dadurch ist es möglich, dass der unter einer Vorspannung stehende mittlere Abschnitt des Halteelements unter bestimmten Belastungszuständen federnd nachgibt.

Das Halteelement kann aus einen Flachmetallstreifen bestehen.

In einer bevorzugten Ausführungsform besteht das Halteelement aus einem Polymer, beispielsweise Polypropylen (PP), oder aus Polyamid (PA; PA6; PA6.6).

Das Halteelement kann im mittleren Abschnitt eine wellige oder geschwungene Form aufweisen, beispielsweise S- oder Z-förmig. In einem solchen Fall wirkt der mittlere Abschnitt des Halteelements in der Art einer Federklammer, so dass das Lüftergehäuse des Radiallüfters klemmend gehalten wird.

In einer Ausführungsform weist der obere Abschnitt des Halteelements eine Länge auf, die größer ist als der Durchmesser des Lüftergehäuses des verwendeten Radiallüfters, so dass die mittleren Abschnitte des Halteelements, die an den Enden des oberen Abschnitts anschließen und sich nach unten zu der Trägerplatte hin erstrecken, einen geringen Abstand zu der Seitenwand des Lüftergehäuses haben. Dadurch kann sich das Lüftergehäuse leicht in radialer Richtung des Radiallüfters gesehen verschieben, beispielsweise aufgrund von leichten Schwingungen oder Stößen, die auf das Lüftergehäuse übertragen werden oder darauf einwirken.

Die Zwischenschicht kann aus Schaumstoff gebildet werden; allerdings sollte ein solcher gewählt werden, der sich dann, wenn er zusammengedrückt wird, in kurzer Zeit wieder zu seinem Ausgangszustand entspannt.

In einer Ausführungsform kann die Zwischenschicht auch aus einem elastischen Polymer bestehen. Elastomere sind formfeste, aber elastisch verformbare Kunststoffe, wie beispielsweise Gummi; aber auch Silikon ist geeignet.

Weitere Einzelheiten und Merkmale der Erfindung ergeben sich aus der nachfolgenden Beschreibung von Ausführungsbeispielen anhand der Zeichnung. In der Zeichnung zeigt
- Figur 1A: einen Teilausschnitt einer rückwärtigen Ansicht eines Sitzgestells, an der ein Radiallüfter durch ein Halteelement mittels Befestigungselementen an einer Trägerplatte gehalten ist, in einer perspektivischen Darstellung,
- Figur 1B: die Anordnung der Figur 1A in einer von vorne gezeigten Ansicht, in der die Öffnung der Trägerplatte mit einer gitterähnlichen Struktur zu sehen ist,
- Figur 2: eine schematische Schnittdarstellung der Lüfteranordnung mit Halteelement, Radiallüftergehäuse, Zwischenschicht und Trägerplatte,
- Figur 3: eine um 90° gedrehte Seitenansicht der Figur 2,
- Figur 4: eine Seitenansicht der Lüfteranordnung, wie sie in Figur 1 gezeigt ist, jedoch mit angedeuteten Kräften und Momenten, die im Betrieb auf den Lüfter wirken,
- Figur 5: eine detaillierte, perspektivische Ansicht des Halteelements, aus der die Verformbarkeit des Halteelements ersichtlich ist,
- Figur 6A: eine perspektivische Ansicht einer Lüfteranordnung mit Trägerplatte und Halteelement, und
- Figur 6B: die Anordnung der Figur 6A in einer perspektivischen Explosionsdarstellung.

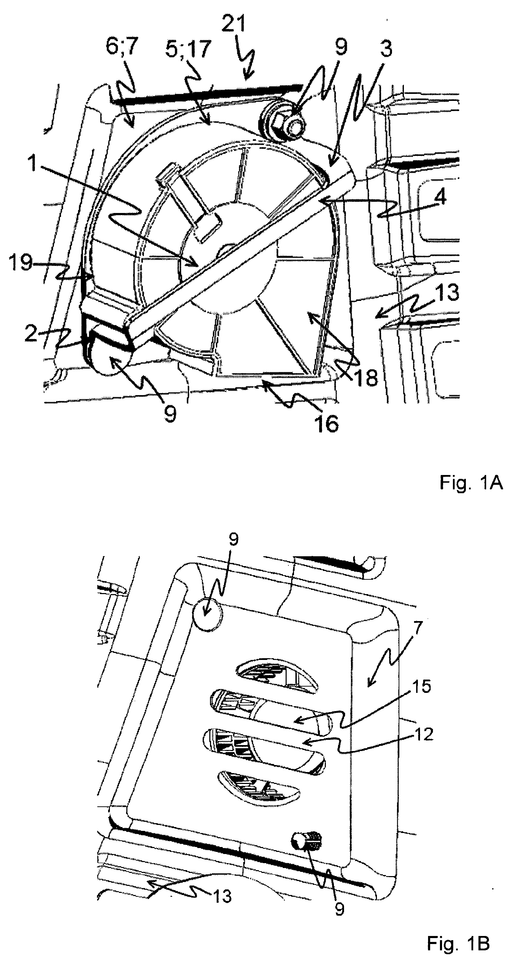

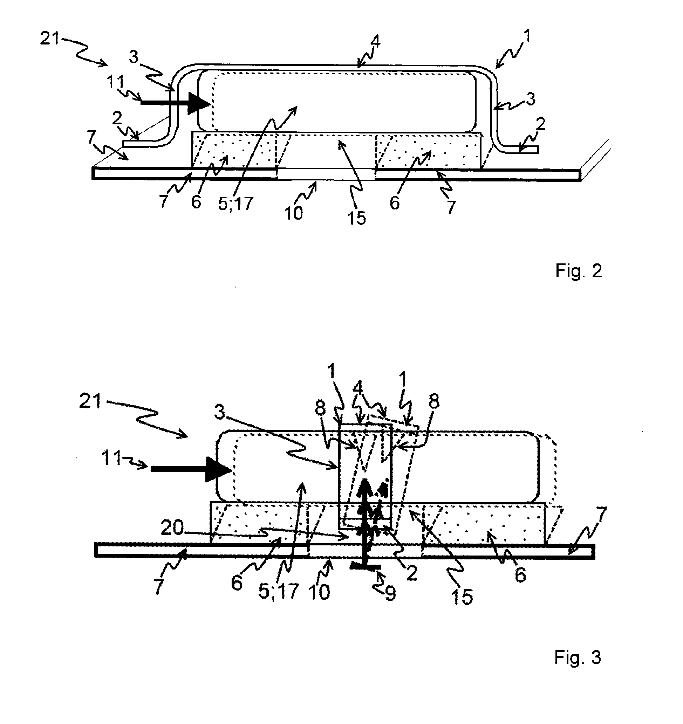

Wie die Figuren, insbesondere die Figuren 1A und 1B, zeigen, umfasst die dort dargestellte Lüfteranordnung 21, die für einen Fahrzeugsitz vorgesehen ist, einen in einem Lüftergehäuse 17 angeordneten Radiallüfter 5. Dieses Lüftergehäuse 17 weist eine axiale Gehäuseöffnung 15 und eine radiale Gehäuseöffnung 17 auf. Das Lüftergehäuse 17 ist mit seiner axialen Gehäuseöffnung 15 auf einer Trägerplatte 7, die Teil eines Sitzgestells 13 ist, angeordnet. Die Befestigung der Trägerplatte 7 ist mittels Befestigungselementen 9, im dargestellten Beispiel Schraubverbindungen, vorgenommen. Mit diesen Befestigungselementen 9 ist gleichzeitig an der Trägerplatte 7 ein Halteelement 1 befestigt, das das Lüftergehäuse 17 klemmend hält. Im Auflagebereich zwischen dem Lüftergehäuse 17 und der Trägerplatte 7 ist eine Zwischenschicht 6 zwischengefügt, die deutlicher in den Figuren 2 bis 4, dort allerdings in einer übertrieben dargestellten Dicke, gezeigt ist. Die Zwischenschicht 6 besteht aus einem reversibel verformbaren Material, so dass sie Bewegungen des darauf aufliegenden Lüftergehäuses 17 nachgeben kann, wie noch nachfolgend anhand der Figuren 2 bis 4 erläutert werden wird.

Das Halteelement 1 umfasst einen oberen Abschnitt 4, zwei mittlere Abschnitte 3 und zwei untere Abschnitte 2. Diese Abschnitte bilden zusammen das in der Seitenansicht U-förmige Halteelement mit nach außen abgewinkelten Enden. Der obere Abschnitt 4 legt sich auf die Oberseite des Lüftergehäuses 17, während sich die mittleren Abschnitte 3 jeweils an die Enden des oberen Abschnitts 4, dazu abgewinkelt, anschließen. Die unteren Abschnitte 2 bilden jeweils einen der Trägerplatte 7 zugeordneten Fuß an dem anderen Ende des jeweiligen mittleren Abschnitts 3. Zumindest die mittleren Abschnitte 3 sind derart ausgelegt, dass sie reversibel verformbar sind. Das Halteelement 1 ist mit denselben Befestigungselementen 9, mit denen die Trägerplatte 7 gehalten ist, über die unteren Abschnitte 2 befestigt. Als Befestigungselement 9 kann alternativ zu der gezeigten Schraube auch ein Clip, ein Druckknopf, ein Dübel, ein Klettband, oder ein anderes, ähnliches Befestigungsmittel, eingesetzt werden. Der Radiallüfter 5 saugt Luft über die axiale Gehäuseöffnung 15 an der unteren Gehäuseseite 19 an. Hierzu sind sowohl die Zwischenschicht 16 als auch die Trägerplatte 7 mit einer entsprechenden, der axialen Gehäuseöffnung 15 zugeordneten Öffnung 10 versehen, wie dies auch anhand der Figur 1B zu sehen ist. Aus Stabilitätsgründen ist die Öffnung 10 in der Trägerplatte 7 aus mehreren Öffnungsschlitzen gebildet, so dass im Bereich der Öffnung 10 eine gitterartige Struktur 12 als Teil der Trägerplatte 7 verbleibt.

Anhand der Figur 1B, die die Vorderseite der Lüfteranordnung der Figur 1A zeigt, wird deutlich, dass die Trägerplatte 7 als Teil eines Sitzgestells 13 ausgebildet ist.

Ein wesentlicher Teil der Lüfteranordnung ist die Zwischenschicht 6, die zwischen Trägerplatte 7 und Lüftergehäuse 17 zwischengefügt ist und aus einem weichen, nachgiebigen, reversibel verformbaren Material besteht.

Üblicherweise befindet sich auf der Oberseite des Sitzgestells 13 und damit oberhalb der oberen Gehäuseseite 18 des Lüftergehäuses 17 ein die Sitzpolsterung des Fahrzeugsitzes bildender Schaumkörper, der in den Figuren nicht gezeigt ist.

In der unteren Gehäuseseite 19 des Lüftergehäuses 17 ist die axiale Gehäuseöffnung 15 angeordnet.

Soweit in den einzelnen Ausführungsformen Bauteile dargestellt sind, die in ihrer Funktion und/oder Wirkung denjenigen einer anderen Ausführungsform entsprechen, sind dieselben Bezugszeichen verwendet, ohne dass diese Bauteile anhand jedes Ausführungsbeispiels erneut beschrieben werden. Daher sind die Ausführungen zu einer Ausführungsform analog auf die entsprechenden anderen Ausführungsformen übertragbar.

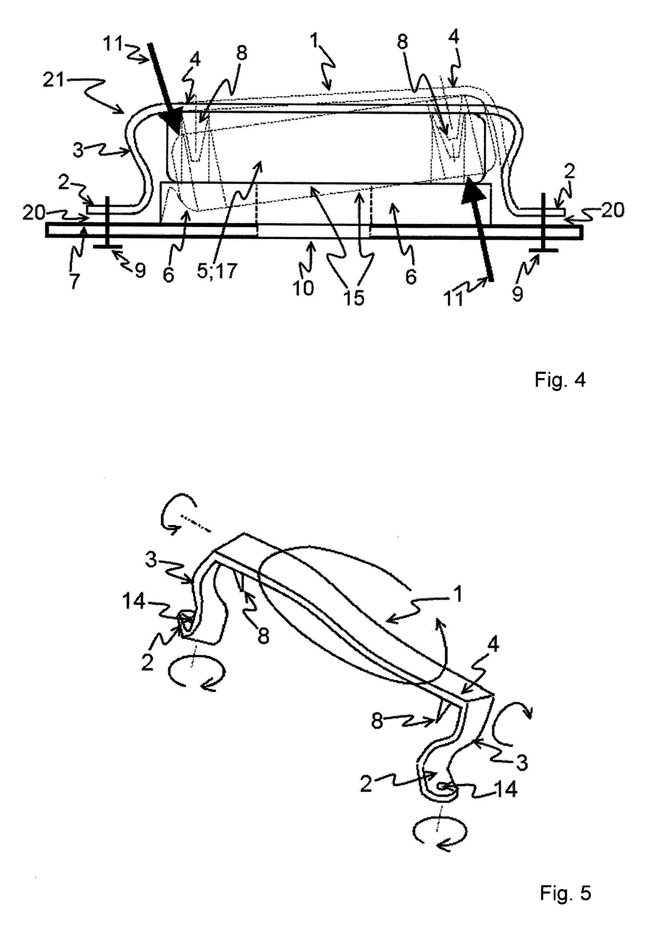

Die Wirkung der zwischen der Trägerplatte 7 und der unteren Gehäuseseite 19 des Lüftergehäuses 17 eingefügten Zwischenschicht 6 in Verbindung mit dem Halteelement 1 wird anhand der nachfolgenden Beschreibung der Figuren 2 bis 5 verdeutlicht. In der normalen Arbeitsstellung wird das Lüftergehäuse 17 des Radiallüfters 5 durch das Halteelement 1 teilweise klemmend gehalten, indem der obere Abschnitt 4 des Halteelements 1 an der oberen Gehäuseseite 18 des Lüftergehäuses 17 anliegt, wie dies auch die Figur 1A zeigt. In dieser Stellung stehen die mittleren Abschnitte 3 unter Spannung, da die daran anschließenden unteren Abschnitte 2, ausgehend von einer Anordnung, wie sie in den Figuren 2 und 4 dargestellt ist und in der zwischen der Trägerplatte 7 und den unteren Abschnitten 2 jeweils ein Luftspalt 20 vorhanden ist, gegen die Trägerplatte 7 verschraubt werden.

Wenn nun seitlich wirkende Kräfte auf die Lüfteranordnung 21 einwirken, die in den Figuren 2 und 3 durch einen Pfeil 11 angedeutet sind, lässt das Halteelement 1 eine seitliche Bewegung des Lüftergehäuses 17 zu, indem sich die mittleren Abschnitte 3 seitlich verschieben.

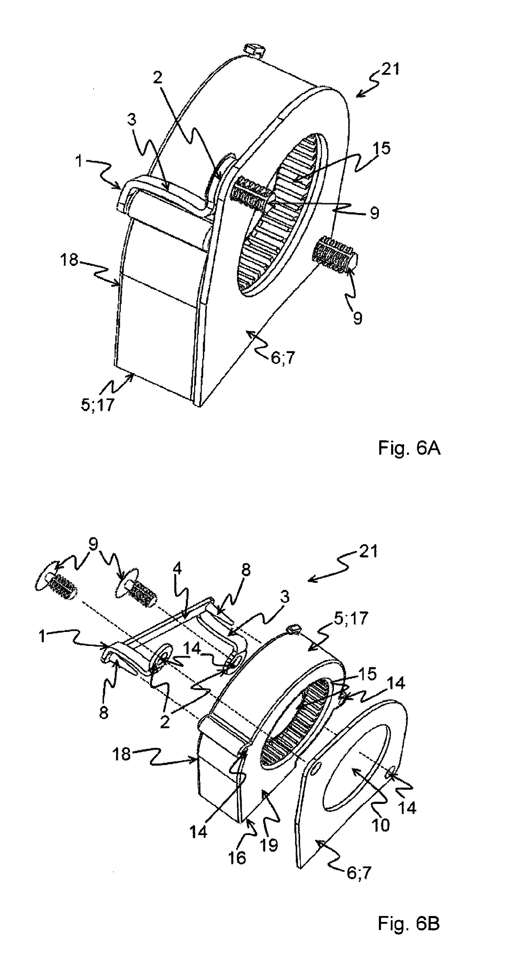

Um das Lüftergehäuse 17 in seiner Lage an dem Halteelement 1 zu fixieren, ist mindestens ein Positionierungselement 8 vorgesehen, das, wie in der Figur 6B zu sehen ist, an dem oberen Abschnitt 4 des Halteelements 1 angeformt ist. Dieses Positionierungselement 8 greift in eine Befestigungsöffnung 14 in der oberen Gehäuseseite 18 des Lüftergehäuses 17 ein. Das Positionierungselement 8 kann an dem Halteelement 1 angeformt oder als separates Teil darin eingesetzt sein.

Während in den Figuren 2 und 3 auf die Lüfteranordnung 21 eine seitliche Kraft, durch den Pfeil 11 angedeutet, einwirkt, ist in Figur 4 eine entsprechende Anordnung gezeigt, bei der Kräfte, ebenfalls durch Pfeile 11 angedeutet, von oben und unten gegen das Lüftergehäuse 17 des Radiallüfters 5 einwirken. Aufgrund dieser Kräfte kann es auftreten, dass sich die Lüfteranordnung 21 leicht unter Stauchung der Zwischenschicht 6 und/oder einer Streckung der S-förmig gebogenen mittleren Abschnitte 3 verdreht. Sobald diese Kräfte wieder nachlassen, entspannt sich die Zwischenschicht 6 und/oder die gestauchten bzw. gestreckten mittleren Abschnitte 3, so dass Zwischenschicht 6, Lüftergehäuse 17 und Halteelement 1 wieder in ihre Ausgangsstellung zurückkehren.

Der mittlere Abschnitt 3 des Halteelements 1 kann, um den vorstehend beschriebenen Effekt zu erreichen, gekrümmt oder wellig verlaufen, unter anderem auch ähnlich einer S- oder Z-Form. Durch eine solche Dimensionierung des mittleren Abschnitts 3 wirkt dieser wie eine Federklammer.

Auf den Lüfter und das Halteelement 1 können sehr unterschiedliche Kräfte einwirken. Aufgrund der Form und des Materials ist jedoch das Halteelement 1 geeignet, diese Kräfte aufzunehmen, wie dies schematisch in Figur 5 gezeigt ist. Die Verwindungsmöglichkeiten des Halteelements 1 sind durch die Drehpfeile 11 jeweils angedeutet. Die Kräfte, die zu einer solchen Verwindung führen können, können auch von dem Lüfter selbst aufgrund von Vibrationen ausgehen. Die Figur 5 zeigt, dass sich alle Abschnitte des Halteelements 1, das bedeutet sowohl der untere Abschnitt 2, der mittlere Abschnitt 3 als auch der obere Abschnitt 4, durch ein reversibel formbares Material und/oder aufgrund einer entsprechenden Formgebung verwinden und/oder federn nachgeben können.

Die Figur 6A zeigt den Zusammenbau des Lüftergehäuses 17 mit der Trägerplatte 7 unter Zwischenfügung der Zwischenschicht 6. Figur 6B zeigt die einzelnen Bauteile der Lüfteranordnung 21 nochmals in einer Explosionsdarstellung, wobei zwischen der unteren Gehäuseseite 19 und der Trägerplatte 7 die Zwischenschicht 6 zwischengefügt wird.

## Patentansprüche

1. Lüfteranordnung (21) für einen Fahrzeugsitz mit einem ein Lüftergehäuse (17) aufweisenden Radiallüfter (5), wobei das Lüftergehäuse (17) eine axiale und eine radiale Gehäuseöffnung (15; 17) aufweist und wobei das Lüftergehäuse (17) mit dessen axialer Gehäuseöffnung (15) auf einer Trägerplatte (7), die Teil eines Sitzgestells (13) ist, positioniert ist und durch mindestens ein Halteelement (1) daran gehalten ist, wobei im Auflagebereich zwischen dem Lüftergehäuse (17) und der Trägerplatte (7) eine Zwischenschicht (6) positioniert ist, **dadurch gekennzeichnet, dass** die Zwischenschicht (6) aus einem reversibel verformbaren Material besteht und dass das Halteelement (1) mindestens einen oberen, zwei mittlere und zwei untere Abschnitte (4; 3; 2) umfasst, wobei die mittleren Abschnitte (3) jeweils an die Enden des oberen Abschnitts (4), dazu abgewinkelt, anschließen und die unteren Abschnitte (2) jeweils einen der Trägerplatte (7) zugeordneten Fuß an dem anderen Ende des jeweiligen mittleren Abschnitts (3) bilden, wobei der obere Abschnitt (4) und die mittleren Abschnitte (3) so dimensioniert sind, dass sich der obere Abschnitt (4) auf der der Trägerplatte (7) abgewandten Seite an das Lüftergehäuse (17) anlegt, und wobei zumindest die mittleren Abschnitte (3) reversibel verformbar sind.

2. Lüfteranordnung nach Anspruch 1, **dadurch gekennzeichnet, dass** an dem Halteelement (1) mindestens ein Positionierungselement (8) angeordnet ist, das in das Lüftergehäuse (17) des Radiallüfters (5) eingreift.

3. Lüfteranordnung nach Anspruch 2, **dadurch gekennzeichnet, dass** das Positionierungselement (8) als Zapfen ausgebildet ist, der in eine Befestigungsöffnung (9) des Lüftergehäuses (17) des Radiallüfters (5) eingreift.

4. Lüfteranordnung nach einem der vorstehenden Ansprüche, **dadurch gekennzeichnet, dass** der mittlere Abschnitt (3) des Halteelements (1) in der Art einer Federklammer wirkt.

5. Lüfteranordnung nach einem der vorstehenden Ansprüche, **dadurch gekennzeichnet, dass** der mittlere Abschnitt (3) eine Länge aufweist, die länger als die Höhe zwischen der oberen Gehäuseseite (18) des Radiallüfters (5) und der Trägerplatte (7) ist.

6. Lüfteranordnung nach einem der vorstehenden Ansprüche, **dadurch gekennzeichnet, dass** der mittlere Abschnitt (3) einen geschwungenen Verlauf aufweist.

7. Lüfteranordnung nach Anspruch 6, **dadurch gekennzeichnet, dass** der mittlere Abschnitt (3) S-förmig verläuft.

8. Lüfteranordnung nach einem der vorstehenden Ansprüche, **dadurch gekennzeichnet, dass** die Zwischenschicht (6) aus einem Schaummaterial besteht.

## Claims

1. A fan assembly (21) for a vehicle seat with a radial fan (5) comprising a fan housing (17), said fan housing (17) comprising an axial and a radial housing opening (15; 17) and the fan housing (21) with its axial housing opening (15) being positioned on a carrier plate (7), which is part of a seat frame (13), and being held thereon by at least one holding element (1), with an intermediate layer (6) being positioned in the support area between the fan housing (17) and the carrier plate (7), **characterized in** in that the intermediate layer (6) consists of a reversibly deformable material, and that the holding element (1) includes at least one upper, two middle and two lower sections (4; 3; 2), wherein the middle sections (3) are each adjoining the ends of the upper section (4), while being angled thereto, and each of the lower sections (2) forms a foot, which is assigned to the carrier plate (7), at the other end of the respective middle section (3), wherein the upper section (4) and the middle sections (3) are dimensioned such that the upper section (4) comes to rest on the fan housing (17) at the side facing away from the carrier plate (7), and wherein at least the middle sections (3) are reversibly deformable.

2. The fan assembly according to claim 1, **characterized in that** at least one positioning element (8) that engages into the fan housing (17) of the radial fan (5) is arranged on the holding element (1).

3. The fan assembly according to claim 2, **characterized in that** the positioning element (8) is designed as a pin which engages into a fastening opening (9) of the fan housing (17) of the radial fan (5).

4. The fan assembly according to any one of the preceding claims, **characterized in that** the middle section (3) of the holding element (1) works in the manner of a spring clip.

5. The fan assembly according to any one of the preceding claims, **characterized in that** the middle section (3) has a length longer than the height between the upper housing side (18) of the radial fan (5) and the carrier plate (7).

6. The fan assembly according to any one of the preceding claims, **characterized in that** the middle section (3) has a curved course.

7. The fan assembly according to claim 6, **characterized in that** the middle section (3) extends in S-shaped configuration.

8. The fan assembly according to any one of the preceding claims, **characterized in that** the intermediate layer (6) consists of a foam material.

## Revendications

1. Agencement de ventilateur (21) pour un siège de véhicule, comprenant un ventilateur radial (5) avec un carter de ventilateur (17), agencement dans lequel le carter de ventilateur (17) présente une ouverture de carter axiale et une ouverture de carter radiale (15 ; 17), et dans lequel le carter de ventilateur (17) est positionné, avec son ouverture de carter axiale (15), sur une plaque de support (7), qui fait partie d'une structure de siège (13), et y est maintenu par un élément de maintien (1), Dans lequel une couche intercalaire (6) est positionnée dans la zone d'appui entre le carter de ventilateur (17) et la plaque de support (7), **caractérisé en ce que** la couche intercalaire (6) est constituée d'un matériau déformable de manière réversible, et **en ce que** l'élément de maintien (1) comprend au moins un tronçon supérieur, deux tronçons médians et deux tronçon inférieurs (4; 3; 2), les tronçons médians (3) se raccordant respectivement aux extrémités du tronçon supérieur (4) en étant coudés par rapport à celui-ci, et les tronçons inférieurs (2) formant respectivement, à l'autre extrémité du tronçon médian (3) respectif, un pied d'appui associé à la plaque de support (7), le tronçon supérieur (4) et les tronçons médians (3) étant dimensionnés de manière à ce que le tronçon supérieur (4) s'applique contre le carter de ventilateur (17) sur le côté opposé à celui dirigé vers la plaque de support (7), et au moins les tronçons médians (3) étant déformables de manière réversible.

2. Agencement de ventilateur selon la revendication 1, **caractérisé en ce que** sur l'élément de maintien (1) est agencé au moins un élément de positionnement (8), qui s'engage dans le carter de ventilateur (17) du ventilateur radial (5).

3. Agencement de ventilateur selon la revendication 2, **caractérisé en ce que** l'élément de positionnement (8) est réalisé en tant que tenon qui s'engage dans une ouverture de fixation (9) du carter de ventilateur (17) du ventilateur radial (5).

4. Agencement de ventilateur selon l'une des revendications précédentes, **caractérisé en ce que** le tronçon médian (3) de l'élément de maintien (1) agit à la manière d'une agrafe élastique.

5. Agencement de ventilateur selon l'une des revendications précédentes, **caractérisé en ce que** le tronçon médian (3) présente une longueur, qui est plus longue que la hauteur entre le côté de carter supérieur (18) du ventilateur radial (5) et la plaque de support (7).

6. Agencement de ventilateur selon l'une des revendications précédentes, **caractérisé en ce que** le tronçon médian (3) présente un tracé incurvé sinueux.

7. Agencement de ventilateur selon la revendication 6, **caractérisé en ce que** le tronçon médian (3) s'étend en forme de S.

8. Agencement de ventilateur selon l'une des revendications précédentes, **caractérisé en ce que** la couche intercalaire (6) est constituée d'un matériau de mousse.
